(19) Europäisches Patentamt
European Patent Office
Office européen des brevets

(11) **EP 2 278 386 A1**

(12) **DEMANDE DE BREVET EUROPEEN**

(43) Date de publication:
**26.01.2011 Bulletin 2011/04**

(51) Int Cl.:
***G02C 7/02*** (2006.01)

(21) Numéro de dépôt: **10180440.9**

(22) Date de dépôt: **13.01.2000**

(84) Etats contractants désignés:
**AT BE CH CY DE DK ES FI FR GB GR IE IT LI LU MC NL PT SE**

(30) Priorité: **22.01.1999 FR 9900708**

(62) Numéro(s) de document de la (des) demande(s) initiale(s) en application de l'article 76 CBE:
**00400081.6 / 1 022 601**

(71) Demandeur: **ESSILOR INTERNATIONAL COMPAGNIE GENERALE D'OPTIQUE 94227 Charenton cédex (FR)**

(72) Inventeurs:
• **Francois, Sandrine**
  **94227 Charenton Cédex (FR)**
• **Ahsbahs, Françoise**
  **94227 Charenton Cédex (FR)**

(74) Mandataire: **Hirsch & Associés**
  **58, avenue Marceau**
  **75008 Paris (FR)**

Remarques:
Cette demande a été déposée le 27-09-2010 comme demande divisionnaire de la demande mentionnée sous le code INID 62.

(54) **Lentille ophtalmique multifocale progressive**

(57) L'invention concerne une lentille ophtalmique multifocale progressive, comportant une surface asphérique présentant en tout point une sphère moyenne et un cylindre, et comprenant une zone de vision de loin avec un point de référence (VL), une zone de vision de près avec un point de référence (VP), une zone de vision intermédiaire, une méridienne principale de progression traversant ces trois zones, et une croix de montage (CM). Selon l'invention, dans la zone de vision de près et dans la zone de vision intermédiaire, on impose une limite supérieure de 0,30 dioptries à la différence de cylindre de part et d'autre de la méridienne. Dans ces mêmes zones, on impose à la variation totale de cylindre de chaque côté de la méridienne une limite égale au produit d'une constante k par l'addition, cette constante k valant 0,10.

Ceci assure une zone de vision de loin large, une bonne binocularité et une bonne vision dynamique dans la zone de vision de près.

fig. 1

**EP 2 278 386 A1**

**Description**

La présente invention concerne les lentilles ophtalmiques multifocales progressives. De telles lentilles sont bien connues; elles sont adaptées à la correction des porteurs presbytes, et fournissent donc une puissance optique différente en vision de loin, et en vision de près, lorsqu'elles sont montées sur une monture.

Les lentilles ophtalmiques progressives comprennent donc habituellement une zone de vision de loin, une zone de vision de près, une zone de vision intermédiaire, une méridienne principale de progression traversant ces trois zones. Le document FR-A-2 699 294, auquel on pourra se référer pour plus de détails, décrit dans son préambule les différents éléments d'une lentille ophtalmique multifocale progressive, ainsi que les travaux menés par la demanderesse pour améliorer le confort des porteurs de telles lentilles. En résumé, on appelle zone de vision de loin la partie supérieure de la lentille, qui est utilisée par le porteur pour regarder loin. On appelle zone de vision de près la partie inférieure de la lentille, qui est utilisée par le porteur pour regarder près, par exemple pour lire. La zone s'étendant entre ces deux zones est appelée zone de vision intermédiaire.

Dans la pratique, les lentilles multifocales progressives comprennent souvent une face asphérique, et une face qui est sphérique ou torique, usinée pour adapter la lentille à la prescription du porteur. Il est donc habituel de caractériser une lentille multifocale progressive par les paramètres surfaciques de sa surface asphérique, à savoir en tout point une sphère moyenne S et un cylindre.

La sphère moyenne S est définie par la formule suivante :

$$S = \frac{n-1}{2}\left(\frac{1}{R_1} + \frac{1}{R_2}\right)$$

avec $R_1$ et $R_2$ les rayons de courbure minimum et maximum, exprimés en mètres, et n l'indice de réfraction du matériau de la lentille.

Le cylindre est donné, avec les mêmes conventions, par la formule:

$$C = (n-1)\left|\frac{1}{R_1} - \frac{1}{R_2}\right|$$

On appelle alors addition la différence de sphère moyenne entre un point de référence de la zone de vision de loin, et un point de référence de la zone de vision de près. Ces deux points de référence sont habituellement choisis sur la méridienne principale de progression.

On appelle méridienne principale de progression une ligne qui est généralement définie comme l'intersection de la surface asphérique d'une lentille et du regard du porteur lorsqu'il regarde devant lui, à différentes distances. La méridienne principale de progression est souvent une ligne ombilique, i. e. dont tous les points présentent un cylindre nul.

La demanderesse a aussi proposé, pour mieux satisfaire les besoins visuels des presbytes et améliorer le confort des lentilles multifocales progressives, d'adapter la forme de la méridienne principale de progression, en fonction de l'addition de puissance, voir la demande de brevet FR-A-2 683 642.

Les lentilles multifocales progressives existantes peuvent encore être améliorées, notamment celles de forte addition. Pour de telles lentilles, les valeurs du cylindre atteignent des niveaux élevés en raison de l'augmentation de la puissance de la lentille. Ceci provoque des perturbations en vision dynamique et une diminution des largeurs de champs en zone de vision intermédiaire et en zone de vision de près. Ceci est d'autant plus gênant que, pour des prescriptions d'addition supérieure à 2.50 le porteur ne dispose plus d'accommodation objective. Dans de tels cas, il est donc préférable de fournir au porteur l'addition dont il a besoin pour une vision nette en vision de près ainsi que des champs de vision larges et accessibles en vision de près et en vision intermédiaire.

Avantageusement, la zone de vision de près est aussi suffisamment haute pour assurer au porteur un confort optimum.

Dans les demandes de brevets FR-A-2 683 642 et FR-A-2 683 643, la demanderesse a déjà proposé des améliorations en proposant de faire varier la forme de la méridienne en fonction de l'addition et donc de l'âge du porteur. Le décalage latéral, côté nasal, du point de référence pour la vision de près, tient compte du rapprochement du plan de lecture avec l'âge du porteur.

La demanderesse a aussi proposé, de faire varier la position du point de référence de la zone de vision de près, non seulement en fonction de l'addition, mais aussi en fonction de l'amétropie, pour tenir compte des effets prismatiques.

Dans la demande de brevet FR-A-2 753 805, la demanderesse a proposé une autre amélioration pour la détermination de la méridienne. Une méthode utilisant un tracé de rayons, permet de déterminer la méridienne, en tenant compte du rapprochement du plan de lecture ainsi que des effets prismatiques. Ainsi, pour une même addition, les porteurs ayant différentes amétropies percevront les mêmes variations de puissance de la zone de vision de loin à la zone de vision de près. La gestion de la sphère et du cylindre assure des champs bien dégagés.

La présente invention propose d'améliorer les lentilles d'addition supérieure ou égale à 2,50. Les lentilles obtenues présentent de larges zones de vision de près et de vision intermédiaire, ainsi qu'une répartition aussi homogène que possible de la sphère et du cylindre, sur l'ensemble de la surface. Elle propose, plus particulièrement, de bien maîtriser les variations du cylindre dans une zone s'étendant de part et d'autre et la méridienne, du milieu de la zone de vision intermédiaire au haut de la zone de vision de près.

La présente invention propose une lentille multifocale qui pallie les inconvénients des lentilles de l'art antérieur et qui assure aussi au porteur une zone de vision de près haute, et une bonne binocularité, non seulement en vision statique, mais aussi en vision dynamique.

L'invention a pour objet une lentille ophtalmique multifocale progressive, comportant une surface asphérique présentant en tout point une sphère moyenne et un cylindre, et comprenant une zone de vision de loin avec un point de référence (VL), une zone de vision de près avec un point de référence (VP), une zone de vision intermédiaire, une méridienne principale de progression traversant ces trois zones, et une croix de montage (CM), **caractérisée en ce que**

- l'addition A définie comme différence de sphère moyenne entre le point de référence pour la zone de vision de près et le point de référence pour la zone de vision de loin est supérieure ou égale à 2,50 dioptries,
- la différence entre la sphère moyenne à la croix de montage et la sphère moyenne au point de référence pour la zone de vision de loin est inférieure ou égale à 0,25 dioptries;
- la zone de vision de loin inclut au moins un secteur angulaire de sommet la croix de montage et d'angle au centre 110°, dans lequel les valeurs de cylindre et de sphère sont inférieures ou égales à 0,50 dioptrie;
- dans une zone de la lentille au dessus du point de référence pour la vision de près, et s'étendant sensiblement jusqu'au milieu de la zone de vision intermédiaire:

    - la valeur absolue de la différence entre les valeurs maximales du cylindre sur 20 mm de part et d'autre de la méridienne est inférieure ou égale à 0,30 dioptries; et
    - de chaque côté de la méridienne, la valeur absolue de la différence entre la valeur maximale du cylindre et la valeur minimale du cylindre est inférieure ou égale au produit k*A d'une constante k par l'addition, la constante k valant 0,10.

Dans un mode de réalisation, la dite zone de la lentille s'étend sur 7 mm, en dessous d'une ligne horizontale située 11 mm en dessous de la croix de montage.

De préférence, la zone de vision de loin présente une limite inférieure dans la partie supérieure de la lentille formée par les lignes d'isosphère A/6, avec A l'addition.

Dans un mode de réalisation, la lentille présente une longueur principale de progression inférieure ou égale à 15 mm, la longueur de progression étant définie comme la différence de hauteur entre la croix de montage et le point de la méridienne présentant une valeur de sphère supérieure de 85% de l'addition à la sphère du point de référence pour la vision de loin.

De préférence, la norme du gradient de la sphère en tout point de la surface est inférieure ou égale au produit k'*A d'une constante k' par l'addition, la constante k' valant 0,1 mm$^{-1}$.

Avantageusement, la valeur supérieure du cylindre ne dépasse pas l'addition de plus de 10%.

Dans un autre mode de réalisation, la norme du gradient du cylindre sur les lignes d'isocylindre de demi-addition, à la hauteur du point de référence pour la vision de près, est inférieure ou égale au produit k"*A d'une constante k" par l'addition, la constante k" valant 0,14 mm$^{-1}$.

De préférence, la distance entre les lignes d'isocylindre de demi-addition, à la hauteur du point de référence pour la vision de près, est supérieure ou égale à 15 mm.

Avantageusement, dans la zone de vision intermédiaire, la distance entre les lignes d'isocylindre de demi-addition, à chaque hauteur, est supérieure ou égale à 40 % de la distance entre les lignes d'isocylindre de demi-addition, à la hauteur du point de référence pour la vision de près.

De préférence, dans la dite zone de la lentille, la valeur absolue de la différence entre les valeurs maximales du cylindre sur 20 mm de part et d'autre de la méridienne est inférieure ou égale à 0,10 dioptries.

D'autres caractéristiques et avantages de la présente invention apparaîtront à la lecture de la description qui suit d'un mode de réalisation de l'invention, donné à titre d'exemple et en référence aux dessins annexés qui montrent:

- figure 1 une vue schématique de la surface asphérique d'une lentille multifocale progressive;
- figure 2, un diagramme des mesures du cylindre sur les lignes de la figure 1, pour une lentille selon l'invention;
- figure 3, un diagramme analogue à celui de la figure 2;
- figure 4, un diagramme analogue à celui de la figure 3, pour une lentille de l'art antérieur;
- figure 5, une représentation graphique de la sphère moyenne le long de la méridienne d'une lentille selon l'invention;
- figure 6, une représentation des lignes d'isosphère de la lentille de la figure 5;
- figure 7, une représentation des lignes d'isocylindre de la lentille de la figure 5.

Dans la suite de la présente description, on considère à titre d'exemple une lentille présentant une surface asphérique dirigée vers l'espace objet et une surface torique ou cylindrique dirigée vers le porteur. Dans la suite de la description, on considère une lentille destinée à l'oeil droit. La lentille pour l'oeil gauche peut être obtenue simplement par symétrie de cette lentille.

On utilise un système de coordonnées orthonormé où l'axe des abscisses correspond à l'axe horizontal de la lentille et l'axe des ordonnées à l'axe vertical; le centre O du repère est le centre géométrique de la surface asphérique de la lentille. Dans la suite, les axes sont gradués en millimètres.

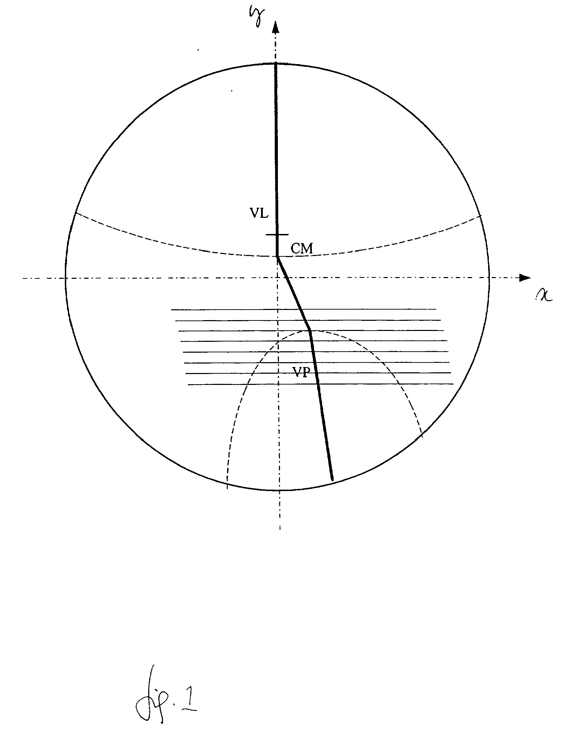

La figure 1 montre une vue schématique de la surface asphérique d'une lentille multifocale progressive, ou plus exactement de la projection de cette surface dans le plan (x, y); on y reconnaît le repère qui vient d'être défini, ainsi que la méridienne principale de progression, qui est portée en gras sur la figure. Dans l'exemple de la figure, la méridienne principale de progression présente globalement deux parties. Dans la première partie , la méridienne principale de progression présente un segment vertical, confondu avec l'axe des ordonnées. Ce segment se termine, à sa partie inférieure, en un point appelé croix de montage. Ce point présente des coordonnées (0, 4), c'est-à-dire qu'il est situé quatre millimètres au dessus du centre de la surface asphérique de la lentille. La croix de montage est utilisée par les opticiens pour le montage de la lentille dans la monture, et correspond à une direction horizontale du regard, pour un porteur ayant la tête droite.

En ce point, on impose de préférence que la sphère moyenne ne dépasse pas la valeur de la sphère moyenne, au point de référence de la zone de vision de loin, de plus de 0,25 dioptries. On assure ainsi une tolérance de 0,25 dioptries pour le porteur, en ce point, par rapport à la valeur de prescription.

La deuxième partie de la méridienne débute à la croix de montage. Elle s'étend du côté nasal de la lentille, traverse les zones de vision intermédiaire et de vision de près et passe par le point de référence de la vision de près. La position de la méridienne peut être calculée par tracé de rayons, de façon à assurer au porteur une vision binoculaire fovéale optimale et ce, quelles que soient la puissance et l'addition de la lentille. Pour plus de détails sur le calcul de la méridienne on pourra se référer au brevet FR 2 753 805.

Le point de référence pour la vision de loin, noté VL sur la figure, est un point de coordonnées (0, 8), i.e. symétrique du centre de la lentille par rapport à la croix de montage. Le point de référence pour la vision de près, noté VP sur la figure, est situé sur la méridienne à une ordonnée y de -14 mm. Son abscisse pour une addition allant de 2,50 à 3,50 varie de 2,0 à 5,0 mm.

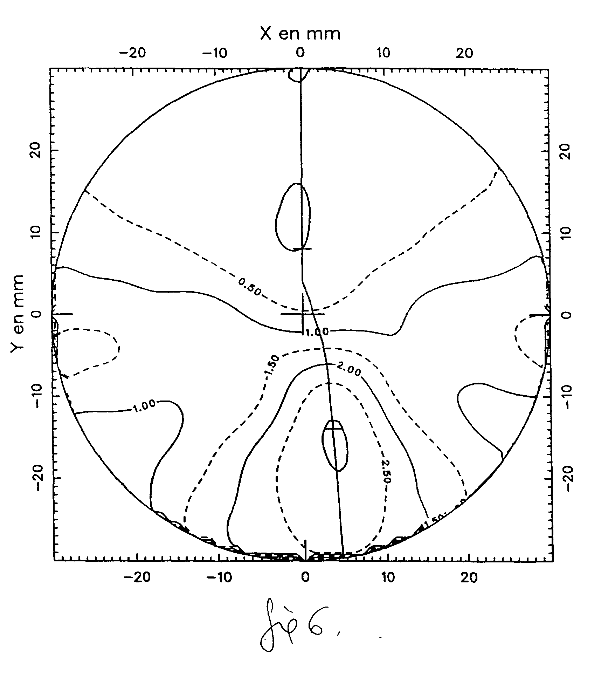

La ligne en pointillés sur la figure, qui passe par la croix de montage CM et qui présente une convexité vers le haut, représente sensiblement la limite inférieure de la zone de vision de loin, dans la partie supérieure de la lentille. Cette limite correspond sensiblement, comme le montre la figure 6, aux lignes d'isosphère 0,50 dioptries, ou A/6 dans le cas de la lentille d'addition A = 3 représentée sur les figures.

De même, la ligne en pointillés sur la figure, qui coupe la méridienne dans sa partie basse, et qui présente une convexité vers le bas, représente sensiblement la limite supérieure de la zone de vision de près, dans la partie inférieure de la lentille. Comme on peut le voir sur la figure 6, cette ligne correspond à peu près, sur les parties latérales, aux lignes d'isosphère 5A/6 ou 2,50 dioptries.

Sur la figure apparaissent en outre des segments de droite, horizontaux, tracés à des ordonnées comprises entre 11 mm sous la croix de montage et 18 mm sous la croix de montage, avec un pas de 1 mm. Chacun de ces segments s'étend de part et d'autre de la méridienne, sur une distance de 20 mm. L'ordonnée de 18 mm sous la croix de montage correspond à l'ordonnée du point de référence pour la vision de près; l'ordonnée de 11 mm sous la croix de montage correspond sensiblement au milieu de la zone de vision intermédiaire. Dans le cas de la figure d'une croix de montage à une ordonnée de 4 mm, les segments s'étendent entre des ordonnées de -7 et -11 mm.

De la sorte, verticalement, les segments matérialisent une zone correspondant à la zone balayée par le regard d'un porteur qui regarde des objets de l'espace objet à des distances variant sensiblement de 60 à 40 cm pour une addition de 2,50 dioptries et de 50 à 33 cm pour une addition de 3,00 dioptries.

Horizontalement, les segments de la figure matérialisent une zone du verre contenant les plus fortes aberrations. On va chercher plus particulièrement à maîtriser les aberrations dans cette zone.

L'invention propose, pour améliorer le confort des porteurs, de limiter les variations horizontales du cylindre dans la zone matérialisée sur la figure 1 par les segments. Plus précisément, l'invention propose de limiter, pour l'ensemble des segments, la différence entre la valeur maximale du cylindre d'un côté de la méridienne et la valeur maximale du cylindre de l'autre côté de la méridienne. Avantageusement, la valeur absolue de la différence est inférieure ou égale à 0,30 dioptries; elle est de préférence inférieure ou égale à 0,10 dioptries.

Pour des lentilles droite et gauche symétriques, cette contrainte sur le cylindre permet de limiter les différences de cylindre entre des points homologues correspondant à un même point de l'espace objet. L'invention permet de la sorte d'améliorer aussi le confort des porteurs en vision binoculaire, dans le haut de la zone de vision de près et dans le bas de la zone de vision intermédiaire.

L'invention propose aussi, pour améliorer le confort des porteurs en vision dynamique, de limiter les variations horizontales et verticales du cylindre, d'un côté et de l'autre de la méridienne. Plus précisément, l'invention propose, sur un côté de la méridienne, de limiter la différence entre la valeur maximale du cylindre et la valeur minimale du cylindre, mesurées sur l'ensemble des segments. Cette différence est avantageusement inférieure ou égale au produit k*A d'une constante k par l'addition A; la valeur de la constante k est par exemple de 0,1, et le produit k*A vaut 0,30 dioptrie dans le cas d'une lentille d'addition 3 dioptries.

Cette contrainte limite, en dehors de la méridienne, les variations de cylindre lorsque le regard du porteur passe de la zone de vision de près à la zone de vision intermédiaire, autrement dit lorsque le porteur regarde un point de l'espace objet dont la distance varie de 50 à 33 cm pour un porteur à qui est prescrite une addition de 3 dioptries. Cette contrainte améliore le confort du porteur en vision dynamique; et minimise les déformations perçues par le porteur.

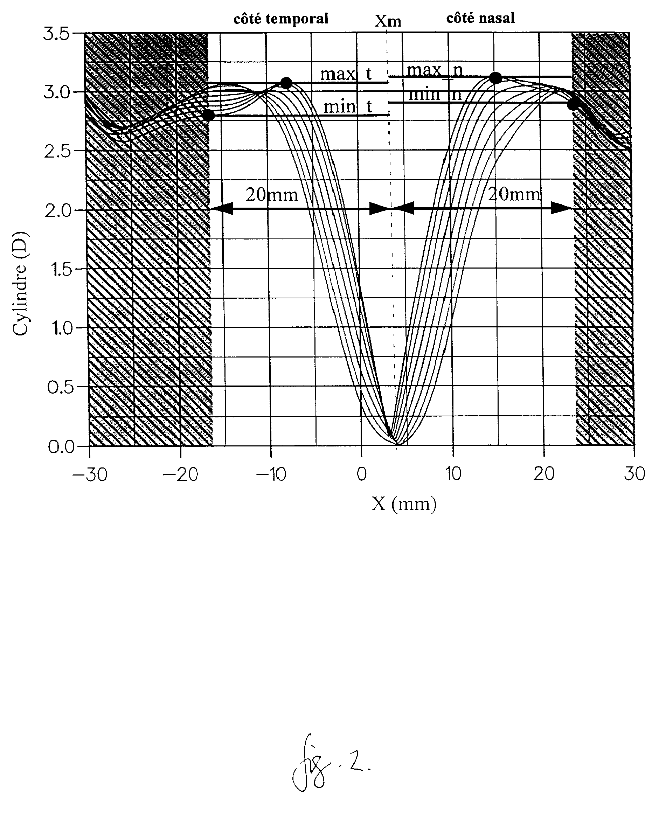

La figure 2 montre un diagramme des mesures du cylindre sur les lignes de la figure 1, pour une lentille selon l'invention; l'axe horizontale représente les abscisses qui sont graduées en mm, et l'axe vertical le cylindre en dioptries. La figure montre pour chacun des segments de droite de la figure 1, la valeur du cylindre; celui-ci est minimal sur la méridienne, où il prend une valeur nulle ou quasiment nulle. Il croît de chaque côté de la méridienne. Elle montre encore la distance de 20 mm de part et d'autre de la méridienne, sur laquelle s'étendent les segments de la figure 1. L'abscisse $x_m$ représente la valeur moyenne de l'abscisse de la méridienne sur la plage d'ordonnées entre -7 et -14 mm, qui pour la lentille de la figure vaut 3,92 mm.

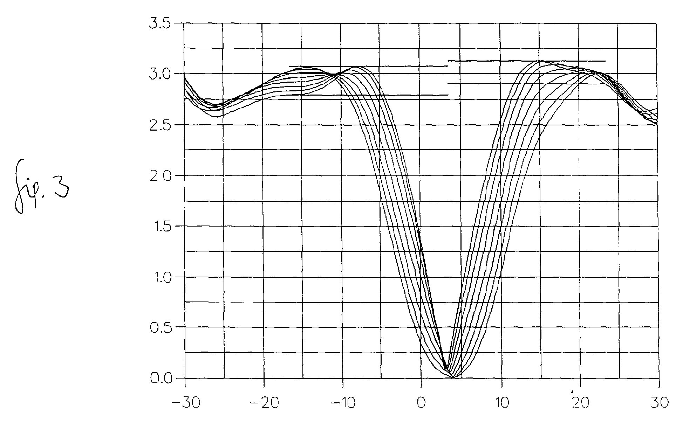

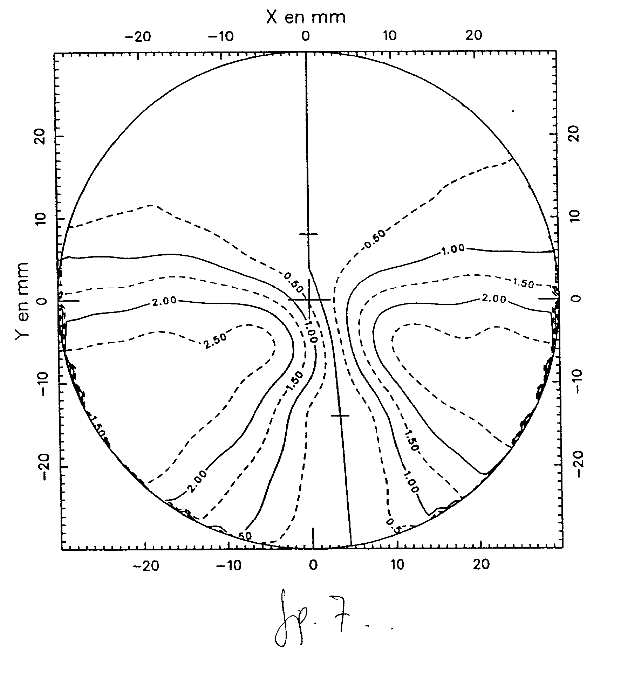

La figure 2 montre en outre, côté temporal, la valeur maximale du cylindre, qui est notée max_t sur la figure. Elle vaut dans le cas de la figure 3,07 dioptries et est atteinte sur le segment de droite d'ordonnée y=-7; la valeur minimale du cylindre sur le côté temporal, notée min_t sur la figure, qui vaut 2,80 dioptries, est atteinte sur le segment de droite d'ordonnée y=-7; la différence 3,07 - 2,80 entre ces deux valeurs vaut 0,282 dioptries; comme le propose l'invention, elle est inférieure ou égale à 0,30 dioptries, c'est à dire au produit k*A, avec k = 0,1 et A = 3 dioptries.

Côté nasal, la valeur maximale max_n du cylindre vaut 3,12 dioptries et est atteinte sur le segment de droite d'ordonnée y=-7 mm . La valeur minimale min_n du cylindre est atteinte sur le segment de droite d'ordonnée y=-7 mm, et vaut 2,90 dioptries. Comme le propose l'invention, la différence entre ces deux valeurs, qui est de 0,22 est inférieure ou égale à 0,30 dioptries, c'est à dire au produit k*A, avec k = 0,1 et A = 3 dioptries dans le cas de l'exemple.

L'invention propose encore de considérer la différence entre la valeur maximale $c_t$ du cylindre côté temporal et la valeur maximale $c_n$ du cylindre côté nasal, et plus précisément, de considérer la valeur absolue $|\Delta c|$ de la différence entre ces deux valeurs.

Dans l'exemple de la figure, la valeur maximale du cylindre côté nasal vaut 3,12 dioptries, et la valeur maximale du cylindre côté temporal vaut 3,07 dioptries; la différence entre ces deux valeurs est de 0,05 dioptries, et est donc bien inférieure ou égale d'une part à la valeur de à 0,30 dioptries, et même à la valeur préférée de 0,10 dioptries.

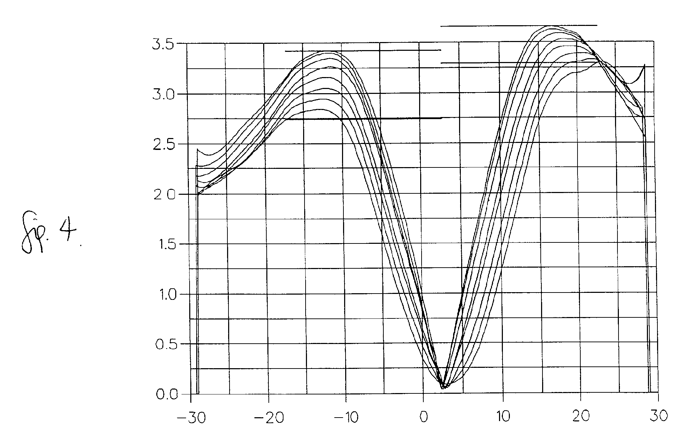

La figure 3 montre un diagramme analogue à celui de la figure 2, mais sans les différentes mentions. A titre de comparaison, la figure 4, un diagramme analogue à celui de la figure 3, pour une lentille de l'art antérieur présentant la même addition de 3 dioptries; la comparaison des figures montre que dans le cas de la lentille de l'art antérieur, la différence entre les valeurs minimales et maximale du cylindre, sur chacun des deux côtés de la méridienne, est supérieure à 0,30 dioptrie. Côté temporal, cette différence vaut 0,67 pour la lentille de l'art antérieur de la figure 4. Côté nasal, cette différence vaut 0,36 pour cette même lentille. La différence entre les valeurs maximales du cylindre de part et d'autre de la méridienne vaut 0,24 dioptries.

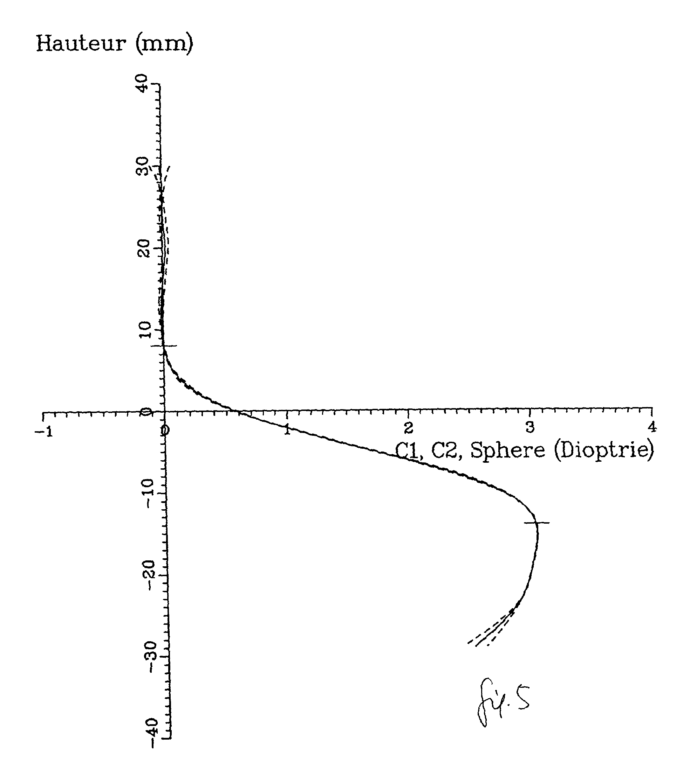

La figure 5 montre une représentation graphique de la sphère moyenne le long de la méridienne d'une lentille selon l'invention; l'axe vertical sur la figure est gradué en mm et représente les ordonnées sur la surface de la lentille, l'axe horizontal est gradué en dioptries, avec un décalage de 5 dioptries. Le trait plein sur la figure montre la sphère moyenne, et les traits pointillés les valeurs $n/R_1$ et $n/R_2$ dont la différence fournit le cylindre. La figure montre que les valeurs $n/R_1$ et $n/R_2$ sont sensiblement identiques, ce qui signifie que le cylindre sur la méridienne est sensiblement nul. Les valeurs de sphère et de cylindre au point de référence pour la vision de loin, d'ordonnée 8 mm sur la méridienne, sont respectivement de 5,19 et 0,01 dioptries. Au point de référence pour la vision de près, d'ordonnée -14 m sur la méridienne, ces valeurs sont de 8,23 et 0,01 dioptries.

La valeur de sphère moyenne à la croix de montage, d'ordonnée 4 mm sur l'axe des ordonnées, est de 0,13 dioptries. Cette valeur présente avec la valeur de sphère au point de référence pour la vision de loin une différence faible. L'invention assure ainsi au porteur, en vision horizontale, une puissance proche de la puissance au point de référence pour la vision de loin. De préférence, la différence entre la sphère à la croix de montage et la sphère au point de contrôle de la vision de loin est inférieure ou égale à 0,25 dioptrie. L'invention assure ainsi pour le porteur une vision nette dans la zone de vision de près et dans la zone de vision de loin ainsi que de larges champs dans la zone de vision de près et dans la zone de vision intermédiaire.

On appelle longueur de progression, dans une lentille multifocale progressive la longueur, ou plus exactement la hauteur sur laquelle la majeure partie de l'addition est acquise. On peut notamment considérer, en partant de la croix de montage, la hauteur sur laquelle la sphère moyenne croît d'une valeur représentant 85% de l'addition. Dans le cas d'une lentille d'addition 3 comme celle de la figure, la longueur principale de progression est donc définie comme la différence entre l'ordonnée du point de référence pour la vision de loin, et l'ordonnée du point pour lequel la sphère moyenne est de 0,85*3 = 2,55 dioptries supérieure à celle de la sphère moyenne au point de référence pour la zone de vision de loin. Dans la lentille de la figure, une sphère moyenne de 5,19 + 2,55 = 7,74 dioptries est atteinte pour un point de la méridienne d'ordonnée y=-8,55 mm. La longueur de progression est ainsi de 12,55 mm. L'invention propose que cette longueur de progression soit de préférence inférieure ou égale à 15,0 mm. Cette valeur assure que la longueur de progression sur la lentille reste faible, et que la zone de vision de près soit sur la lentille suffisamment proche de la zone de vision de près, pour que le porteur n'ait pas besoin de faire des mouvements de tête, de bas en haut et de haut en bas.

La figure 6 montre une représentation des lignes d'isosphère de la lentille de la figure 5; ces lignes sont constituées des points de la surface asphérique présentant une même valeur de sphère moyenne. Cette valeur est indiquée sur les lignes de la figure. On a porté à la figure les lignes d'isosphère pour la valeur de sphère du point de référence pour la vision de loin - la ligne en traits continus passant par le point de référence pour la vision de loin, et les lignes d'isosphère pour des valeurs 0,50; 1,00; 1,50; 2,00; 2,50 et 3,00 dioptries au dessus de la valeur de sphère moyenne pour le point de référence pour la vision de loin. Le trait plein autour du point de référence pour la zone de vision de près est la ligne d'isosphère à trois dioptries au dessus de la valeur de la sphère pour le point de référence pour la vision de loin. Comme le montre la figure, la pente de sphère moyenne sur la surface de la lentille est avantageusement inférieure ou égale au produit k'*A d'une constante k' par l'addition, la constante k' valant 0,1 mm$^{-1}$, soit dans le cas de la lentille de la figure, inférieure ou égale à 0,30 dioptrie/mm. On appelle dans ce contexte pente de la sphère la norme du gradient de la sphère, en un point donné de la surface asphérique; le gradient de la sphère est le vecteur qui a comme coordonnées ($\delta S/\delta x$, $\delta S/\delta y$) dans le repère (x; y).les valeurs respectives des dérivées partielles de la sphère par rapport à x et par rapport à y.

La figure 7 montre une représentation des lignes d'isocylindre de la lentille de la figure 5. Ces lignes sont définies de façon similaire aux lignes d'isosphère de la figure 6; la ligne d'isocylindre correspondant à une valeur de cylindre nulle correspond sensiblement à la méridienne; on a aussi porté sur la figure les lignes d'isocylindre 0,50; 1,00; 1,50; 2,00; et 2,50 dioptries. Comme le montre la figure, et du fait de la présence de la méridienne de cylindre nul dans la partie médiane de la lentille, il existe en fait deux lignes d'isocylindre pour chaque valeur du cylindre, une sur le côté nasal et l'autre sur le côté temporal.

La figure montre en outre que la valeur maximale du cylindre sur la surface de la lentille - sur un rayon de 30 mm - est proche de la valeur de l'addition, soit trois dioptries dans l'exemple de la figure. La valeur maximale est en fait de 3,12 dioptries côté nasal, et elle est atteinte en un point de coordonnées (x = 15; y = -7). Il est avantageux de limiter sur la surface de la lentille la valeur du cylindre, à une limite supérieure qui est proche de l'addition, et de préférence, à une limite supérieure dont la différence avec l'addition est inférieure ou égale à 10% de celle-ci. Une telle contrainte permet d'éviter les déformations de la lentille.

Comme expliqué plus haut, les lignes d'isosphère 0,50 dioptries, ou A/6 dans le cas de la figure 6 pour une lentille d'addition 3 dioptries, représentent sensiblement la limite inférieure de la zone de vision de loin. La figure 6 montre aussi deux demi-droites, ayant pour origine la croix de montage, et qui sont sensiblement tangentes à ces lignes d'isosphère 0,50 dioptries. L'angle entre ces deux droites, sur la partie supérieure de la surface, est avantageusement d'au moins 110°. Dans le secteur angulaire déterminé par ces deux demi-droites, dans la partie supérieure de la lentille, la valeur du cylindre reste inférieure ou égale à 0,50 dioptries; de préférence, la valeur de sphère est aussi inférieure ou égale à 0,50 dioptries. Une telle valeur de l'angle entre les demi-droites assure un large champ de vision de loin; elle impose de repousser sur les côtés latéraux de la surface de la lentille les fortes valeurs de cylindre. Ceci, notamment pour les additions élevées - typiquement les additions au delà de 2,50 dioptries - constitue un bon compromis entre le souhait d'une large zone de vision de loin, et le souhait d'une répartition de la sphère moyenne et du cylindre aussi homogène que possible sur la surface de la lentille.

On a décrit plus haut, la limitation du bas de la zone de vision de loin, par rapport aux lignes d'isosphère. Pour les zones de vision intermédiaire et de vision de près, la limitation des champs peut plutôt être déterminée par rapport aux lignes d'isocylindre. En effet, dans ces zones, les valeurs de cylindre sont beaucoup plus élevées que dans la zone de vision de loin. De plus, alors qu'un défaut de puissance peut être corrigé par accommodation, le cylindre surfacique créée automatiquement une gêne pour le porteur. Il est donc préférable, dans les zones de vision de près et de vision intermédiaire, de se référer aux lignes d'isocylindre pour déterminer les largeurs de champs.

Les lignes d'isocylindre A/2, soit 1,5 dioptries dans le cas de la lentille des figures, représentent sensiblement les limites latérales de la zone de vision intermédiaire comme de la zone de vision de près. La distance entre ces lignes d'isocylindre représente donc sensiblement la largeur de la zone de vision de près ou de la zone de vision intermédiaire. Dans la lentille de la figure, à l'ordonnée y = -14 mm du point de référence de la vision de près, la distance horizontale entre les lignes d'isocylindre A/2 - i. e. la différence des abscisses des deux points des lignes d'isocylindre A/2 présentant une ordonnée de -14 mm égale à celle du point de référence pour la vision de près - est de 15,5 mm. L'invention propose que cette largeur de la zone de vision de près, mesurée de la sorte entre les isocylindres A/2 à la hauteur du point de référence pour la vision de près, soit avantageusement supérieure ou égale à 15 mm. Une telle largeur de champ assure au porteur un champ suffisant pour une vision de près confortable. Cette largeur de champ inclut notamment une feuille ou un livre de taille habituelle.

On peut aussi considérer la pente de cylindre au voisinage de la limite de la zone de vision de près. Cette pente de cylindre est représentative des variations locales du cylindre. Elle est définie comme la pente de sphère, par la norme du gradient du cylindre, en un point donné. Le fait de maintenir celles-ci à des valeurs faibles permet d'éviter les déformations brusques en vision dynamique au bord de la zone de vision de près. Dans la lentille de la figure 7, à la hauteur du point de référence de la zone de vision de près, à y = -14 mm, la pente de cylindre sur les lignes d'isocylindre A/2 vaut 0,38 dioptrie/mm côté temporal, et 0,38 dioptrie/mm côté nasal. Avantageusement, l'invention propose que la pente du cylindre, sur les lignes d'isocylindre A/2 à la hauteur du point de référence pour la zone de vision de près, soit inférieure ou égale au produit k"*A d'une constante k" par l'addition A, la constante k" valant 0,14 mm$^{-1}$; pour la lentille d'addition 3 de la figure, ceci correspond à une limite de 0,42 dioptries/mm.

Imposer une telle limite permet d'améliorer la vision dynamique du porteur, non seulement dans la zone de vision de près, mais sur les bords de celle-ci.

Dans la zone de vision intermédiaire, la largeur peut être mesurée entre les lignes d'isocylindre A/2. Cette largeur est de préférence toujours supérieure à 40% de la largeur de la zone de vision de près à la hauteur du point de référence pour la zone de vision de près. Dans la lentille donnée en exemple aux figures, la largeur de la zone de vision intermédiaire entre les lignes d'isocylindre A/2 est minimale pour une ordonnée de l'ordre de -4 mm, et vaut alors 6,75 mm. Cette valeur est bien supérieure à 40 % de la largeur de 15,5 mm de la zone de vision de près à la hauteur du point de référence pour la vision de près.

On détaille maintenant les différentes caractéristiques qui permettent de réaliser les différentes lentilles selon l'invention. La surface des lentilles est de façon connue en soi, continue et trois fois continûment dérivable. Comme cela est connu de l'homme du métier, la surface de lentilles progressives s'obtient par optimisation numérique à l'aide d'un calculateur, en fixant des conditions aux limites pour un certain nombre de paramètres de la lentille.

On peut utiliser comme conditions aux limites un ou plusieurs des critères définis plus haut.

On peut aussi avantageusement commencer par définir, pour chacune des lentilles de la famille, une méridienne principale de progression. On peut utiliser à cet effet l'enseignement du brevet FR-A-2 683 642 susmentionné. On peut aussi utiliser toute autre définition de la méridienne principale de progression pour appliquer l'enseignement de l'invention. On notera les deux exemples de méridienne, donnés en référence à la figure 1, et en référence aux figures 5 à 7.

Bien entendu, la présente invention n'est pas limitée à la présente description: entre autres, la surface asphérique pourrait être la surface dirigée vers le porteur des lentilles. Par ailleurs, on n'a pas insisté dans la description sur l'existence de lentilles qui peuvent être différentes pour les deux yeux. Enfin, si la description donne un exemple de lentille d'addition 3, l'invention s'applique aussi à des lentilles présentant d'autres additions.

**Revendications**

1. Lentille ophtalmique multifocale progressive, comportant une surface asphérique présentant en tout point une sphère moyenne et un cylindre, et comprenant une zone de vision de loin avec un point de référence (VL), une zone de vision de près avec un point de référence (VP), une zone de vision intermédiaire, une méridienne principale de progression traversant ces trois zones, et une croix de montage (CM), **caractérisée en ce que**

   - l'addition A définie comme différence de sphère moyenne entre le point de référence pour la zone de vision de près et le point de référence pour la zone de vision de loin est supérieure ou égale à 2,50 dioptries,
   - la différence entre la sphère moyenne à la croix de montage et la sphère moyenne au point de référence pour la zone de vision de loin est inférieure ou égale à 0,25 dioptries;
   - la zone de vision de loin inclut au moins un secteur angulaire de sommet la croix de montage et d'angle au centre 110°, dans lequel les valeurs de sphère et de cylindre sont inférieures ou égales à 0,50 dioptrie;
   - dans une zone de la lentille au dessus du point de référence pour la vision de près, et s'étendant sensiblement jusqu'au milieu de la zone de vision intermédiaire:

      - la valeur absolue de la différence entre les valeurs maximales du cylindre sur 20 mm de part et d'autre de la méridienne est inférieure ou égale à 0,30 dioptries; et
      - de chaque côté de la méridienne, la valeur absolue de la différence entre la valeur maximale du cylindre et la valeur minimale du cylindre est inférieure ou égale au produit k*A d'une constante k par l'addition, la constante k valant 0,10.

2. Lentille selon la revendication 1, **caractérisée en ce que** la dite zone de la lentille s'étend sur 7 mm, en dessous d'une ligne horizontale située 11 mm en dessous de la croix de montage.

3. Lentille selon la revendication 1 ou 2, **caractérisée en ce que** la zone de vision de loin présente une limite inférieure dans la partie supérieure de la lentille formée par les lignes d'isosphère A/6, avec A l'addition.

4. Lentille selon la revendication 1, 2 ou 3, **caractérisée par** une longueur principale de progression inférieure ou égale à 15 mm, la longueur de progression étant définie comme la différence de hauteur entre la croix de montage et le point de la méridienne présentant une valeur de sphère supérieure de 85% de l'addition à la sphère du point de référence pour la vision de loin.

5. Lentille selon l'une des revendications 1 à 4, **caractérisée en ce que** la norme du gradient de la sphère en tout point de la surface est inférieure ou égale au produit k'*A d'une constante k' par l'addition, la constante k' valant 0,1 mm$^{-1}$.

6. Lentille selon l'une des revendications 1 à 5, **caractérisée en ce que** la valeur supérieure du cylindre ne dépasse pas l'addition de plus de 10%.

7. Lentille selon l'une des revendications 1 à 6, **caractérisée en ce que** la norme du gradient du cylindre sur les lignes d'isocylindre de demi-addition, à la hauteur du point de référence pour la vision de près, est inférieure ou égale au produit k"*A d'une constante k" par l'addition, la constante k" valant 0,14 mm$^{-1}$.

8. Lentille selon l'une des revendications 1 à 7, **caractérisée en ce que** la distance entre les lignes d'isocylindre de demi-addition, à la hauteur du point de référence pour la vision de près, est supérieure ou égale à 15 mm.

9. Lentille selon l'une des revendications 1 à 8, **caractérisée en ce que** dans la zone de vision intermédiaire, la distance entre les lignes d'isocylindre de demi-addition, à chaque hauteur, est supérieure ou égale à 40 % de la distance entre les lignes d'isocylindre de demi-addition, à la hauteur du point de référence pour la vision de près.

10. Lentille selon l'une des revendications 1 à 9, **caractérisée en ce que** dans la dite zone de la lentille, la valeur absolue de la différence entre les valeurs maximales du cylindre sur 20 mm de part et d'autre de la méridienne est inférieure ou égale à 0,10 dioptries.

fig. 1

fig. 2.

fig. 3

fig. 4

fig. 5

fig 6.

fig. 7

Europäisches
Patentamt

European
Patent Office

Office européen
des brevets

## RAPPORT DE RECHERCHE EUROPEENNE

Numéro de la demande

EP 10 18 0440

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 691 798 A (SMITH SCOTT W [US]) 25 novembre 1997 (1997-11-25) * colonne 3, ligne 54 - colonne 5, ligne 27; figures 1A-13C; exemples 1, 2; tableaux 1A-2B * ----- | 1-10 | INV. G02C7/02 |
| X | EP 0 452 802 A2 (ZEISS CARL FA [DE]; ZEISS STIFTUNG [DE]) 23 octobre 1991 (1991-10-23) * colonne 5, ligne 26 - colonne 7, ligne 38; figures 1-8 * ----- | 1-10 | |
| X | DE 196 12 284 A1 (ZEISS CARL FA [DE]) 2 octobre 1997 (1997-10-02) * page 3, ligne 25 - page 5, ligne 51; figures 1-6 * ----- | 1-10 | |
| X | US 5 708 493 A (AHSBAHS FRANÇOISE [FR] ET AL) 13 janvier 1998 (1998-01-13) * colonne 3, ligne 61 - colonne 9, ligne 15; figures 1-8 * ----- | 1-10 | DOMAINES TECHNIQUES RECHERCHES (IPC) G02C |

Le présent rapport a été établi pour toutes les revendications

| Lieu de la recherche | Date d'achèvement de la recherche | Examinateur |
|---|---|---|
| Munich | 2 décembre 2010 | Bratfisch, Knut |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 18 0440

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-12-2010

| Document brevet cité au rapport de recherche | | Date de publication | Membre(s) de la famille de brevet(s) | | Date de publication |
|---|---|---|---|---|---|
| US 5691798 | A | 25-11-1997 | JP | 9159976 A | 20-06-1997 |
| EP 0452802 | A2 | 23-10-1991 | AT | 119688 T | 15-03-1995 |
| | | | AU | 7425691 A | 24-10-1991 |
| | | | CA | 2040216 A1 | 20-10-1991 |
| | | | DE | 4012609 A1 | 24-10-1991 |
| | | | JP | 5100191 A | 23-04-1993 |
| | | | US | 5137343 A | 11-08-1992 |
| DE 19612284 | A1 | 02-10-1997 | AT | 295552 T | 15-05-2005 |
| | | | AU | 717888 B2 | 06-04-2000 |
| | | | AU | 1653197 A | 02-10-1997 |
| | | | CA | 2201391 A1 | 28-09-1997 |
| | | | EP | 0802441 A2 | 22-10-1997 |
| | | | ES | 2241013 T3 | 16-10-2005 |
| | | | JP | 10031198 A | 03-02-1998 |
| | | | US | 5784144 A | 21-07-1998 |
| US 5708493 | A | 13-01-1998 | AU | 697240 B2 | 01-10-1998 |
| | | | AU | 3446395 A | 09-05-1996 |
| | | | BR | 9504883 A | 02-09-1997 |
| | | | CA | 2161560 A1 | 29-04-1996 |
| | | | DE | 19538470 A1 | 02-05-1996 |
| | | | ES | 2112182 A1 | 16-03-1998 |
| | | | FR | 2726374 A1 | 03-05-1996 |
| | | | GB | 2294553 A | 01-05-1996 |
| | | | IE | 950799 A1 | 01-05-1996 |
| | | | IT | 1276579 B1 | 03-11-1997 |
| | | | JP | 3080295 B2 | 21-08-2000 |
| | | | JP | 8211339 A | 20-08-1996 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 2699294 A
- FR 2683642 A
- FR 2683643 A
- FR 2753805 A
- FR 2753805